# EUROPÄISCHE PATENTSCHRIFT

(11) **EP 3 665 312 B1**
(45) Veröffentlichungstag und Bekanntmachung des Hinweises auf die Patenterteilung: **06.03.2024**
(21) Anmeldenummer: 18762773.2
(22) Anmeldetag: 13.08.2018
(51) Int. Cl.: C22C 9/04, C22C 18/02, E03C 1/04, C22C 1/04, B33Y 70/00, B22F 1/05

(54) **KUPFERLEGIERUNG, VERWENDUNG EINER KUPFERLEGIERUNG, SANITÄRARMATUR UND VERFAHREN ZUR HERSTELLUNG EINER SANITÄRARMATUR**
COPPER ALLOY, USE OF A COPPER ALLOY, SANITARY FITTING AND METHOD FOR PRODUCING A SANITARY FITTING
ALLIAGE DE CUIVRE, UTILISATION D'UN ALLIAGE DE CUIVRE, ARMATURE SANITAIRE ET PROCÉDÉ DE FABRICATION D'UNE ROBINETTERIE SANITAIRE

(30) Priorität: 11.08.2017 DE 102017118386
(43) Veröffentlichungstag der Anmeldung: 17.06.2020
(73) Patentinhaber: LIXIL Corporation, Tokyo 141-0033 (JP)
(72) Erfinder: ROMANOWSKI, Carsten, 58638 Iserlohn (DE)
(74) Vertreter: karo IP
(86) Internationale Anmeldenummer: PCT/EP2018/071949
(87) Internationale Veröffentlichungsnummer: WO 2019/030416

(56) Entgegenhaltungen:
- EP-A1- 1 273 671
- CN-A- 1 570 164
- CN-A- 102 443 716
- CN-A- 106 884 106
- KR-A- 20110 025 509
- US-A1- 2013 115 128
- US-A1- 2014 346 413
- US-A1- 2015 249 046

## Beschreibung

Die vorliegende Erfindung betrifft eine Verwendung einer Kupferlegierung für ein generatives Fertigungsverfahren. Sanitärarmaturen dienen insbesondere der bedarfsgerechten Bereitstellung einer Flüssigkeit, wie beispielsweise Wasser, an Spülbecken, Waschbecken, Duschen und/oder Badewannen.

Sanitärarmaturen weisen regelmäßig ein Gehäuse auf, durch das die Flüssigkeit mit Leitungen und/oder Kanälen zu einem Auslauf des Gehäuses führbar ist. Zudem sind an dem Gehäuse regelmäßig Stellglieder, wie zum Beispiel mindestens ein Hebel und/oder mindestens ein (Dreh-)Griff, angeordnet, mittels denen eine Temperatur der Flüssigkeit und/oder eine Durchflussmenge der Flüssigkeit steuerbar sind. Hierzu kann in dem Gehäuse beispielsweise mindestens ein Mischventil und/oder mindestens ein Thermostatmischventil angeordnet sein. Das Gehäuse der Sanitärarmatur kann aus Kunststoff und/oder Metall bestehen. Bei einem Gehäuse aus Metall kommt insbesondere eine Kupferlegierung bzw. ein Messingwerkstoff zum Einsatz, wodurch das Gehäuse mittels eines Gießverfahrens herstellbar ist. Die Gestaltung bzw. das Design des Gehäuses muss für die angewendeten Gießverfahren geeignet sein, sodass die Freiheitsgrade bei der Gestaltung bzw. bei dem Design der Gehäuse limitiert sind.

Es besteht nun der Wunsch, die Gestaltungsfreiheit für solche Gehäuse von Sanitärarmaturen durch den Einsatz eines generativen Fertigungsverfahrens zu erhöhen. Bei einem generativen Fertigungsverfahren kann das Gehäuse auf einer Unterlage schichtweise aufgebaut werden, wobei ein formbares Ausgangsmaterial an einer vorgegebenen Position abgelegt und dann verfestigt wird. Eine Serienfertigung entsprechender Gehäuse durch generative Fertigungsverfahren, insbesondere auch unter wirtschaftlichen Betrachtungen, verlangt eine Anpassung des Werkstoffs, weil die hierfür bislang eingesetzten Kupferlegierungen bzw. Messingwerkstoffe durch ihre hohe Wärmeleitfähigkeit und ihren hohen Schmelzpunkt für derartige Fertigungsverfahren nicht ausreichend geeignet sind.

Aus US 2015/0249046 A1 ist ein Halbleiter-Bauteil bekannt, das > 40 Gew. % Cu und < 60 Gew. % Zn enthält umfasst. KR 2011 0025509 A offenbart eine Legierung, die eine goldene Farbe hat und durch Gießen gefolgt von einer Wärmebehandlung hergestellt wird. Diese besteht aus 50 - 56 Gew. % Cu, 0,2 - 5 Gew. % Sn, 0,6 - 5 Gew. % AI, Rest Zn. CN 1 570 164 A offenbart eine Legierung, die als Dekor z. B. von Haus-Bauteilen wie Fenstern oder Balkonen verwendet wird. Diese umfasst 50 - 85 Gew. % Cu und 15 - 50 Gew. % Zn., <1,5 Gew. % Pb und <0,5 Gew. % AI. CN 106884106 A offenbart mit Bindemittel versetzte Cu-Legierungs-Pulver. Diese werden in Form von Spritzguss inklusive Sintern weiterverarbeitet, wobei das Bindemittel entweicht. Ein solches Pulver kann Cu50Zn50 sein. US 2014/0346413 A1 offenbart ein Legierungs-Pulver, das 1 - 50 Gew. % Ni und/oder Zn, Rest Cu enthält und dessen Körner mit Ag beschichtet sind. US 2013/0115128 A1 offenbart eine auf > 50% Cu und 10 - 45 % Zn basierte Legierung, die zudem S enthält.

Aufgabe der Erfindung ist es daher, die mit Bezug auf den Stand der Technik geschilderten Probleme zumindest teilweise zu lösen und insbesondere eine vorteilhafte Verwendungsmöglichkeit für eine Kupferlegierung mit einer niedrigeren Wärmeleitfähigkeit und einem niedrigeren Schmelzpunkt anzugeben.

Diese Aufgabe wird gelöst mit einer Verwendung einer Kupferlegierung gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Verwendung einer Kupferlegierung bei, welche die folgenden Elemente mit den angegebenen Massenanteilen aufweist:
- 46 % bis 53,5 % Kupfer (Cu);
- 0 % bis 1,0 % Aluminium (Al);
- 0 % bis 1,40 % Blei (Pb);
- 0 % bis 0,2 % Eisen (Fe);
- 0 % bis 0,4 % Zinn (Sn);
- 0 % bis 0,0002 % Bor (B);
- 0 % bis 0,2 % Arsen (As); und
- Rest Zink (Zn)
- ggf. Verunreinigungen,
für ein generatives Fertigungsverfahren.

Die Kupferlegierung kann so ausgewählt sein, dass neben Kupfer und Zink noch zumindest ein, zwei, drei, vier, fünf oder sechs der weiteren, vorstehenden Elemente mit einem Anteil größer 0 % vorliegt.

Bevorzugt ist, dass die Mehrzahl der weiteren, vorstehenden Elemente mit einem Anteil größer 0 % vorliegt, insbesondere alle mit Ausnahme von Blei und/oder Arsen.

Es ist möglich, dass die neben Kupfer und Zink vorliegenden Elemente in Summe nicht mehr als 2,5 %, gegebenenfalls nicht mehr als 2,5 % oder sogar nicht mehr als 1,0 % betragen.

Es ist möglich, dass nach Kupfer und Zink das Element Aluminium mit dem größten Massenanteil vorliegt.

Es ist möglich, dass nach Kupfer und Zink das Element Blei mit dem größten Massenanteil vorliegt.

Es ist möglich, dass in etwa ein gleicher Massenanteil von Eisen und Zinn vorliegt.

Es ist möglich, dass in etwa ein gleicher Massenanteil von Arsen und Blei vorliegt.

Beispielsweise kann diese Kupferlegierung ausgewählt sein, dass zumindest eine oder ggf. alle der folgenden Bereichsangabe(n) für die Elemente vorliegen:
- 46 % bis 51 % Kupfer (Cu);
- 0,4 % bis 0,51 % Aluminium (Al);
- 0 % bis 0,85 % Blei (Pb);
- 0,05 % bis 0,08 % Eisen (Fe);
- 0,1 % bis 0,18 % Zinn (Sn);
- 0 % bis 0,0002 % Bor (B);
- 0 % bis 0,15 % Arsen (As); und
- Rest Zink (Zn).

Gegebenenfalls kann die Kupferlegierung unvermeidbare Restbestandteile anderer Elemente (z. B. Verunreinigungen) umfassen, beispielsweise Titan (Ti), Wismut (Bi) und/oder Antimon (Sb), wobei diese in Summe auf maximal 0,25 % bzw. einzeln auf maximal 0,02 % begrenzt sind.

Klar ist, dass die Kupferlegierung mit den hier angegebenen Bereichen so zu wählen ist, dass die Summe der Legierungsbestandteile 100 % ergibt.

Diese Kupferlegierung ist für den Einsatz in einem Gießverfahren und/oder einem generativen Fertigungsverfahren geeignet. Generative Fertigungsverfahren umfassen eine Additive Fertigung, ein Additive Manufacturing (AM) oder einen 3D-Druck. Bei generativen Fertigungsverfahren erfolgt die Fertigung auf der Basis von dreidimensionalen Datenmodellen aus insbesondere formlosem Material, wie zum Beispiel (Metall-)Pulver, mittels chemischer und/oder physikalischer Prozesse. Die Legierung ist insbesondere für das sogenannte selektive Laserschmelzen (Selective Laser Melting (SLM)) im Pulverbettverfahren geeignet, bei dem der verarbeitete Werkstoff in Pulverform in einer dünnen Schicht auf einer Grundplatte aufgebracht und mittels Laserstrahlung lokal geschmolzen wird. Der geschmolzene Werkstoff bildet nach der Erstarrung eine feste Materialschicht. Anschließend wird die Grundplatte um den Betrag einer Schichtdicke abgesenkt und erneut Werkstoff in Pulverform aufgetragen. Dieser Zyklus wird so lange wiederholt, bis alle Schichten umgeschmolzen sind. Das fertige Bauteil wird vom überschüssigen Pulver gereinigt und weiter mechanisch bearbeitet und/oder veredelt.

Bekannte Kupferlegierungen für Sanitärarmaturen umfassen insbesondere ca. 39 % Zink und ca. 3 % Blei und Rest Kupfer (sämtliche Prozentangaben dieses Dokuments beziehen sich auf Massenprozent). Im Vergleich zu den bekannten Kupferlegierungen weist die vorgeschlagene Kupferlegierung einen geringeren Kupfergehalt und einen erhöhten Zinkgehalt mit angepassten Massenanteilen von Aluminium und Eisen auf. Durch den geringeren Kupfergehalt, den erhöhten Zinkgehalt sowie die starke Limitierung bzw. Vermeidung der Kornfeinung durch Bor wird der Schmelzpunkt (Gießtemperatur und Schweißtemperatur: ca. 895 bis 930 °C) und die Wärmeleitfähigkeit der Kupferlegierung reduziert. Hierdurch wird eine stabile Schmelze für generative Fertigungsverfahren ermöglicht. Die Verarbeitungstemperatur in die Nähe des Siedepunkts von Zink wird gesenkt (905 °C), wodurch sich die Verdampfung des Zinks bei der Verarbeitung der Kupferlegierung stark reduziert. Dadurch eignet sich die Kupferlegierung besonders für das selektive Laserschmelzen (Selective Laser Melting (SLM)). Die Legierungsbestandteile Aluminium und Eisen dienen insbesondere der Stabilisierung der Kupferlegierung. Bei einer Verarbeitung der Kupferlegierung durch ein Gießverfahren erstarrt die Kupferlegierung zudem grobkörnig, weist eine höhere Festigkeit als bekannte Kupferlegierungen bzw. Messing auf und/oder ist stabiler gegen Spannungsrisskorrosion. Zudem können durch eine Verschiebung des Kupferanteils zu dem Zinkanteil die Materialkosten gesenkt werden.

Die Kupferlegierung kann (mehr als) 0,12 % bis (maximal) 0,85 % Blei (Pb) aufweisen. Die Kupferlegierung weist somit eine höhere Festigkeit und eine vorteilhafte Korngeometrie auf. Die höhere Festigkeit und die vorteilhafte Korngeometrie führen insbesondere zu einem guten Spanbruch bei der Zerspannung.

Die Kupferlegierung kann (mehr als) 0 % bis maximal 0,12 % Blei (Pb) aufweisen. Eine solche bleiarme Kupferlegierung weist eine noch höhere Festigkeit und eine noch vorteilhaftere Korngeometrie auf. Beispielsweise kann die Festigkeit bei Einsatz einer solchen Kupferlegierung gegenüber einer Kupferlegierung mit bis 0,85 % Blei weiter gesteigert werden. Die erzielbare Korngeometrie kann dazu führen, dass die Kupferlegierung gut schleifbar und polierbar wird.

Die Kupferlegierung kann 0 % Blei (Pb) aufweisen, ggf. auch mit Blei im Bereich einer Verunreinigung mit einem Anteil von maximal 0,02 %. Eine solche bleifreie Kupferlegierung weist eine noch weiter erhöhte Festigkeit auf, wodurch die Kupferlegierung insbesondere für dünnwandige Gehäuse einer Sanitärarmatur geeignet ist. Ein dünnwandiges Gehäuse einer Sanitärarmatur hat beispielsweise eine Wandstärke kleiner als 5,0 mm [Millimeter], insbesondere kleiner 3,0 mm oder sogar kleiner 2,0 mm, wobei die Wandstärke aus Gründen der Stabilität 0,5 mm nicht unterschreiten sollte. Beispielsweise kann die Festigkeit bei Einsatz einer Kupferlegierung mit weniger als 0,22 % oder sogar maximal 0,12 % Blei gegenüber einer Kupferlegierung mit 0 % Blei noch weiter gesteigert werden.

Weiterhin ist es vorteilhaft, wenn die Kupferlegierung 0 % Arsen (As) aufweist, ggf. auch mit Blei im Bereich einer Verunreinigung mit einem Anteil von maximal 0,02 %.

Des Weiteren ist es vorteilhaft, wenn die Kupferlegierung (mehr als) 0,02 % bis 0,2 % oder sogar nur bis 0,15 % Arsen (As) aufweist. Das Zulegieren von Arsen (As) reduziert weitgehend bzw. verhindert ein Entzinken der Kupferlegierung durch Korrosion. Die Kupferlegierung weist dadurch eine Entzinkungsbeständigkeit bzw. DR-Eigenschaften (*"dezincification resistance properties"*) auf. Weiterhin führt Arsen (As) zu einem einphasigen und grobkörnigen Gefüge.

Unterscheidungsmerkmal zu herkömmlichen Kupferlegierungen, insbesondere im Sanitärbereich, kann anhand des Gefüges demonstriert werden. Insbesondere liegt bei der (gegossenen) Kupferlegierung bzw. dem daraus gebildeten Sanitärarmatur-Gehäuse praktisch vollständig ein einphasiges Gefüge vor.

Die Kupferlegierungen kann überwiegend, fast vollständig oder gar mit einer reinen BETA-Phase auftreten und ein bcc-Gitter (bcc : "*body-centered-cubic*"; kubisch raumzentriert) aufweisen. Dieses Gefüge kann sich durch ein vergleichsweise großes Korn auszeichnen.

Die folgenden Kupferlegierungen haben sich als besonders vorteilhaft herausgestellt:

| Element | MS-AM Pb0 | MS-AM Pb012 | MS-AM Pb08 | MS-AM Pb0 | MS-AM Pb012 | MS-AM Pb08 |
|---|---|---|---|---|---|---|
| | bleifrei | bleiarm | bleireduziert | bleifrei | bleiarm | bleireduziert |
| | normal | normal | normal | DR | DR | DR |
| Cu | 46,00 - 51,00 % | 46,00 - 51,00 % | 46,00 - 51,00 % | 46,00 - 51,00 % | 46,00 - 51,00 % | 46,00 - 51,00 % |
| Al | 0,40 - 0,51 % | 0,40 - 0,51 % | 0,40 - 0,51 % | 0,40 - 0,51 % | 0,40 - 0,51 % | 0,40 - 0,51 % |
| Pb | 0% | 0-0,12% | 0,12 - 0,85 % | 0 % | 0-0,12% | 0,12-0,85% |
| Fe | 0,05 - 0,08 % | 0,05 - 0,08 % | 0,05 - 0,08 % | 0,05 - 0,08 % | 0,05 - 0,08 % | 0,05 - 0,08 % |
| Sn | 0,10-0,18% | 0,10-0,18% | 0,10-0,18% | 0,10 - 0,18 % | 0,10-0,18% | 0,10-0,18% |
| B | 0 - 0,0002 % | 0 - 0,0002 % | 0 - 0,0002 % | 0 - 0,0002 % | 0 - 0,0002 % | 0 - 0,0002 % |
| As | 0% | 0% | 0% | 0,02 - 0,15 % | 0,02 - 0,15 % | 0,02 - 0,15 % |
| Zn | Rest | Rest | Rest | Rest | Rest | Rest |

| Element | Test 3A | Test 38 | Test 3C | Test 3D | Test 3E | Test 3F |
|---|---|---|---|---|---|---|
| Cu | 48,0 - 53,5 % | 48,0 - 53,5 % | 48,0 - 53,5 % | 48,0 - 53,5 % | 48,0 - 53,5 % | 48,0 - 53,5 % |
| Al | 0,1 - 0,4 % | 0,7-0,9% | 0,1-0,4% | 0,7-0,9 % | 0,1-0,4% | 0,7-0,9 % |
| Pb | 0,8-1,3% | 0,8-1,3% | 0,8-1,3% | 0,8 - 1,3 % | 0,8 - 1,3 % | 0,8 - 1,3 % |
| Fe | 0,1-0,2% | 0,1-0,2 % | 0,1-0,2% | 0,1-0,2% | 0,1-0,2% | 0,1 - 0,2 % |
| Sn | 0,1-0,3% | 0,1 - 0,3 % | 0,1-0,3% | 0,1-0,3% | 0,1-0,3 % | 0,1 - 0,3 % |
| B | 0 - 0,0002 % | 0 - 0,0002 % | 0 - 0,0002 % | 0 - 0,0002 % | 0 - 0,0002 % | 0 - 0,0002 % |
| As | 0% | 0% | 0% | 0% | 0% | 0% |
| Zn | Rest | Rest | Rest | Rest | Rest | Rest |

Konkret wurden folgende Kupferlegierungen gemäß den nachfolgend genannten Eigenschaften bewertet:

| Element | MS-AM Pb0 | MS-AM Pb012 | MS-AM Pb08 | MS-AM Pb0 | MS-AM Pb012 | MS-AM Pb08 |
|---|---|---|---|---|---|---|
| | bleifrei | bleiarm | blei reduziert | bleifrei | bleiarm | bleireduziert |
| | normal | normal | normal | DR | DR | DR |
| Cu | 50,00 % | 50,00 % | 49,37 % | 50,00 % | 50,00 % | 49,37 % |
| Al | 0,48 % | 0,48 % | 0,48 % | 0,48 % | 0,48 % | 0,48 % |
| Pb | 0% | 0,12 % | 0,75 % | 0% | 0,12 % | 0,75 % |
| Fe | 0,07 % | 0,07 % | 0,07 % | 0,07 % | 0,07 % | 0,07 % |
| Sn | 0,16 % | 0,16 % | 0,16 % | 0,16 % | 0,16% | 0,16 % |
| B | 0,0002 % | 0,0002 % | 0,0002 % | 0,0002 % | 0,0002 % | 0,0002 % |
| As | 0% | 0% | 0% | 0,10 % | 0,10 % | 0,10 % |
| Zn | 49,29 % | 49,17 % | 49,17 % | 49,19 % | 49,07 % | 49,07 % |

| Element | Test 3A | Test 3B | Test 3C | Test 3D | Test 3E | Test 3F |
|---|---|---|---|---|---|---|
| Cu | 51% | 51% | 52 % | 52 % | 53 % | 53 % |
| Al | 0,3 % | 0,8 % | 0,3 % | 0,8 % | 0,3 % | 0,8 % |
| Pb | 0,85 % | 0,85 % | 0,85 % | 0,85 % | 0,85 % | 0,85 % |
| Fe | 0,15 % | 0,15 % | 0,15 % | 0,15 % | 0,15 % | 0,15 % |
| Sn | 0,2% | 0,2 % | 0,1 % | 0,1 % | 0,3 % | 0,3 % |
| B | 0,0002 % | 0,0002 % | 0,0002 % | 0,0002 % | 0,0002 % | 0,0002 % |
| As | 0% | 0% | 0% | 0% | 0% | 0% |
| Zn | 47,5 % | 47% | 46,6 % | 46,1 % | 45,4 % | 44,9% |

Bewertet wurden zumindest einige der folgenden Eigenschaften: Gieß-Eignung, SLM-Eignung, Wärmeleitfähigkeit, Zinkverdampfung, Festigkeit, Korrosionsbeständigkeit, Spannungsrisskorrosion, Spanbruchverhalten, Schleif-Eignung, Eignung für dünnwandige Gehäuse, Spannungsrissbeständigkeit, Entzinkungsbeständigkeit, Härte.

Zur Härtebestimmung wurden zylindrische Proben mit einem Durchmesser von 60 mm gegossen. An diesen wurde die Härte nach Vickers mit einem Pyramidenkörper und einer Last von 40kgf bestimmt.

Hervorzuheben sind insbesondere folgende (überraschende) Eigenschaften der vorgeschlagenen Kupferlegierung, die sich bei einer entsprechend geeigneten Wahl der Legierungselemente erreichen lassen:
- Der Herstellungsprozess von Produkten lässt sich deutlich energieärmer durchführen, weil eine niedrigere Schmelztemperatur gegenüber Legierungen mit höherem Anteil von Kupfer einstellbar ist. So kann die Schmelztemperatur beispielsweise von oberhalb 930 °C bis 1.040 °C auf einen Bereich unter 930 °C, ggf. bis ca. 900 ° C abgesenkt werden.
- Trotz geringem Bleigehalt kann eine (spanende) Nachbearbeitung so durchgeführt werden, dass unerwünschte Wendelspäne vermieden werden. Hierzu kann ggf. eine zusätzliche Wasserkühlung vorteilhaft sein.
- Die Korrosionsbeständigkeit der vorgeschlagenen Kupferlegierung kann gegenüber Legierungen mit höherem Anteil von Kupfer zumindest beibehalten werden, sogar unter Spannung. Auch hinsichtlich der Entzinkungsbeständigkeit ist kein Abfall hinzunehmen.
- Entgegen aller Erwartungen kann die Gießfähigkeit der vorgeschlagenen Kupferlegierung gegenüber Legierungen mit höherem Anteil von Kupfer verbessert werden.
- Gegenüber Legierungen mit höherem Anteil von Kupfer lassen sich größere Körner im Gefüge einstellen, wobei ein einphasiges Gefüge vorliegt. Damit lassen sich die Härte und/oder die Zugfestigkeit (Rm) verbessern. So kann beispielsweise eine Steigerung der Zugfestigkeit (Rm) von 15 - 20 Prozent eingestellt werden.
- Es ist auch möglich, eine gegenüber Legierungen mit höherem Anteil von Kupfer höhere Härte erzielen, wobei eine Steigerung von bis zu 30 Prozent festgestellt werden konnte. So ist möglich, mit der hier vorgeschlagenen Kupferlegierung eine Härte von mindestens 100 HV oder sogar mindestens 110 HV oder ca. 120 HV einzustellen.

Besonders vorteilhaft ist es, wenn die Kupferlegierung pulverförmig ist und eine Partikelgröße von 5 µm (Mikrometer) bis 1.500 µm aufweist. Die Partikel liegen dabei insbesondere in einer sphärischen und/oder polyedrischen Form vor. Die Partikelgröße bezieht sich insbesondere auf einen durchschnittlichen Durchmesser eines Partikels der Kupferlegierung. Partikelgrößen von 5 µm bis 30 µm eignen sich insbesondere für Füllstrukturen, dichteste Endstrukturen, Färbebeimischungen, Mikrostrukturen, Mikrolegierung während des Druckens, zur Erzeugung von Leitfähigkeit, katalytische Stoffe, Zweistoffsysteme, Korrosionsinhibitoren, antibakterielle Materialien, akustische Dämmstoffe und/oder Wärmedämmstoffe. Partikelgrößen von 30 µm bis 70 µm eignen sich insbesondere für Formstrukturen, mitteldichte Endstrukturen, Stützstrukturen, Zweistoffsysteme, akustische Dämmstoffe und/oder Wärmedämmstoffe. Partikelgrößen von 70 µm bis 1.500 µm eignen sich insbesondere für Grobstrukturen, poröse bis mitteldichte Endstrukturen, Siebstrukturen, Filterstrukturen, offene Strukturen, Grobfüllstrukturen, Stützstrukturen, Zweistoffsysteme, Dreistoffsysteme, akustische Dämmstoffe und/oder Wärmedämmstoffe.

Es wird die Verwendung einer hier angegebenen Kupferlegierung für ein generatives Fertigungsverfahren, insbesondere das SLM-Verfahren, vorgeschlagen.

Es wird eine Sanitärarmatur mit einem Gehäuse vorgeschlagen, wobei das Gehäuse zumindest teilweise aus einer hier angegebenen Kupferlegierung besteht.

Es wird ein Verfahren zur Herstellung einer Sanitärarmatur angegeben, wobei ein Gehäuse der Sanitärarmatur zumindest teilweise aus einer hier angegebenen Kupferlegierung hergestellt wird. Die Herstellung des Gehäuses erfolgt durch ein Gießverfahren oder ein generatives Fertigungsverfahren.

Insbesondere wird die Verwendung einer hier angegebenen Kupferlegierung, insbesondere mit einer reinen Monophase (BETA-Phase), für die Herstellung einer (insbesondere dünnwandigen) Sanitärarmatur oder Teilen davon mittels eines Gießverfahrens oder mittels eines generativen Fertigungsverfahrens vorgeschlagen.

Die Erfindung sowie das technische Umfeld werden nachfolgend anhand von Figuren näher erläutert. Es ist darauf hinzuweisen, dass die Figuren besonders bevorzugte Ausführungsvarianten der Erfindung zeigen, diese jedoch nicht darauf beschränkt ist.

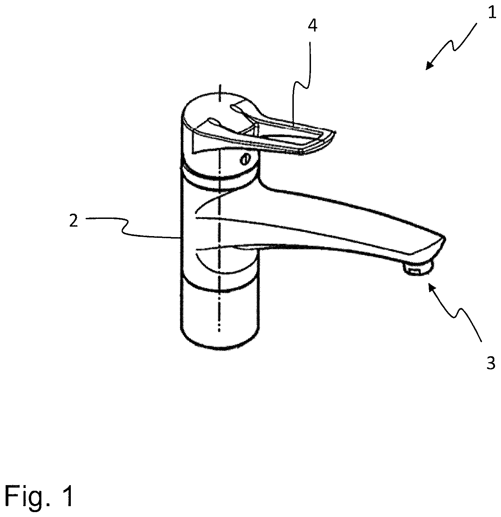

Die Figur 1 zeigt eine Sanitärarmatur 1 mit einem Gehäuse 2, durch das Wasser zu einem Auslauf 3 führbar ist. Die Temperatur des Wassers sowie eine Entnahmemenge des Wassers sind mittels eines an dem Gehäuse 2 angeordneten Hebels 4 steuerbar. Das Gehäuse 2 besteht zumindest teilweise aus der vorgeschlagenen Kupferlegierung.

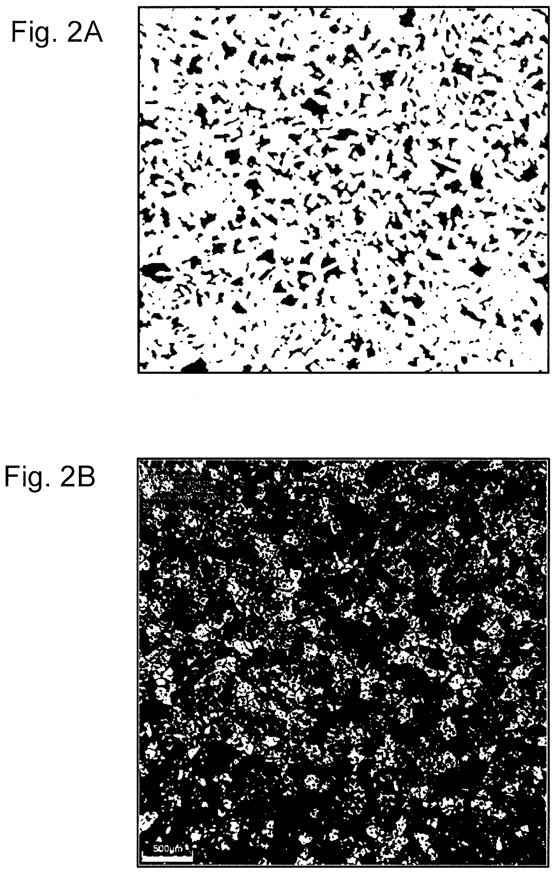

In Fig. 2 sind beispielhaft die unterschiedlichen Gefügestrukturen einer bekannten Kupferlegierung (Fig. 2A) und der hier vorgeschlagenen Kupferlegierungen (Fig. 2B) veranschaulicht. In Fig. 2A ist zu erkennen, dass ca. 60 Prozent ALPHA-Phase (helle Bereiche) und ca. 40 Prozent BETA-Phase (dunkle Bereiche) vorliegen. Signifikant verschieden davon stellt sich eine hier vorgeschlagene Kupferlegierung dar, nämlich mit einer überwiegenden oder gar nahezu vollständigen einphasigen BETA-Phase (vgl. dunkle Bereiche Fig. 2B).

Als ein Vergleichsbeispiel, dessen Gefüge auch in Fig. 2A veranschaulicht ist, kann insbesondere folgende Kupferlegierung (M60) herangezogen werden:

| Element | Cu [%] | Al [%] | Pb [%] | Fe [%] | Sn [%] | B [%] | As [%] | Ni [%] | Zn [%] |
|---|---|---|---|---|---|---|---|---|---|
| M60 | 59-61 | 0,4 - 0,7 | 1,2 - 2,2 | ≤ 0,2 | ≤ 0,2 | ≤ 0,2 | ≤ 0,02 | ≤ 0,2 | Rest |

Zudem kann die Kupferlegierung M60 unvermeidbare Restbestandteile anderer Elemente (z. B. Verunreinigungen) umfassen, beispielsweise auch Phosphor (P), Mangan (MN), Wismut (Bi), Chrom (Cr), Schwefel (S), Magnesium (Mg) und/oder Antimon (Sb), wobei diese einzeln auf maximal 0,02 % begrenzt sind.

Die hier neu vorgeschlagene Kupferlegierung weist eine niedrige Wärmeleitfähigkeit und einen niedrigeren Schmelzpunkt auf und eignet sich in vorteilhafter Weise für Gießverfahren und generative Fertigungsverfahren zur Herstellung von Sanitärarmaturen.

### Bezugszeichenliste

- 1: Sanitärarmatur
- 2: Gehäuse
- 3: Auslauf
- 4: Hebel

## Patentansprüche

1. Verwendung einer Kupferlegierung, deren Elemente folgende Massenanteile aufweisen:
- 46 % bis 53,5 % Kupfer (Cu);
- 0 % bis 1,0 % Aluminium (Al);
- 0 % bis 1,40 % Blei (Pb);
- 0 % bis 0,2 % Eisen (Fe);
- 0 % bis 0,4 % Zinn (Sn);
- 0 % bis 0,0002 % Bor (B);
- 0 % bis 0,2 % Arsen (As); und
- Rest Zink (Zn),
für ein generatives Fertigungsverfahren.

2. Verwendung einer Kupferlegierung nach Anspruch 1, wobei die Kupferlegierung entweder 0,12 % bis 0,85 % Blei (Pb) oder 0 % bis 0,12 % Blei (Pb), insbesondere 0 % Blei (Pb) aufweist.

3. Verwendung einer Kupferlegierung nach Anspruch 1 oder 2, wobei die Kupferlegierung 0% Arsen (As) aufweist.

4. Verwendung einer Kupferlegierung nach Anspruch 1 oder 2, wobei die Kupferlegierung 0.02% bis 0.15% Arsen (As) aufweist.

5. Verwendung einer Kupferlegierung nach einem der Ansprüche 1 bis 3, wobei die Kupferlegierung pulverförmig ist und eine Partikelgröße von 5 µm bis 1.500 µm aufweist.

6. Verwendung einer Kupferlegierung nach Anspruch 5, wobei die Kupferlegierung pulverförmig ist und eine Partikelgröße von 5 µm bis 30 µm aufweist.

7. Verwendung einer Kupferlegierung nach Anspruch 5, wobei die Kupferlegierung pulverförmig ist und eine Partikelgröße von 30 µm bis 70 µm aufweist.

8. Verwendung einer Kupferlegierung nach Anspruch 5, wobei die Kupferlegierung pulverförmig ist und eine Partikelgröße von 70 µm bis 1.500 µm aufweist.

9. Verwendung einer Kupferlegierung nach einem der Ansprüche 1 bis 3, wobei die Kupferlegierung 0.05 % bis 0.2 % Eisen (Fe) aufweist.

10. Verwendung einer Kupferlegierung nach Anspruch 9, wobei die Kupferlegierung 0.05 % bis 0.08 % Eisen (Fe) aufweist.

11. Verwendung einer Kupferlegierung nach einem der Ansprüche 1 bis 10, wobei die Kupferlegierung 0.1 % bis 0.4 % Zinn (Sn) aufweist.

12. Verwendung einer Kupferlegierung nach Anspruch 11, wobei die Kupferlegierung 0.1 % bis 0.18 % Zinn (Sn) aufweist.

13. Verwendung einer Kupferlegierung nach einem der Ansprüche 1 bis 12, wobei die Kupferlegierung 0.4% bis 0.51 % Aluminium (Al) aufweist.

14. Verwendung einer Kupferlegierung nach einem der Ansprüche 1 bis 13, wobei die Kupferlegierung Bor (B) aufweist.

## Claims

1. Use of a copper alloy wherein the elements have mass fractions as follows:
- 46% to 53.5% copper (Cu);
- 0% to 1.0% aluminium (Al);
- 0% to 1.40% lead (Pb);
- 0% to 0.2% iron (Fe);
- 0% to 0.4% tin (Sn);
- 0% to 0.0002% boron (B);
- 0% to 0.2% arsenic (As); and
- balance zinc (Zn),
for a generative manufacturing process.

2. Use of a copper alloy according to Claim 1, wherein the copper alloy comprises either 0.12% to 0.85% lead (Pb) or 0% to 0.12% lead (Pb), more particularly 0% lead (Pb).

3. Use of a copper alloy according to Claim 1 or 2, wherein the copper alloy comprises 0% arsenic (As).

4. Use of a copper alloy according to Claim 1 or 2, wherein the copper alloy comprises 0.02% to 0.15% arsenic (As).

5. Use of a copper alloy according to any of Claims 1 to 3, wherein the copper alloy is in powder form and has a particle size of 5 µm to 1500 µm.

6. Use of a copper alloy according to Claim 5, wherein the copper alloy is in powder form and has a particle size of 5 µm to 30 µm.

7. Use of a copper alloy according to Claim 5, wherein the copper alloy is in powder form and has a particle size of 30 µm to 70 µm.

8. Use of a copper alloy according to Claim 5, wherein the copper alloy is in powder form and has a particle size of 70 µm to 1500 µm.

9. Use of a copper alloy according to any of Claims 1 to 3, wherein the copper alloy comprises 0.05% to 0.2% iron (Fe).

10. Use of a copper alloy according to Claim 9, wherein the copper alloy comprises 0.05% to 0.08% iron (Fe).

11. Use of a copper alloy according to any of Claims 1 to 10, wherein the copper alloy comprises 0.1% to 0.4% tin (Sn).

12. Use of a copper alloy according to Claim 11, wherein the copper alloy comprises 0.1% to 0.18% tin (Sn).

13. Use of a copper alloy according to any of Claims 1 to 12, wherein the copper alloy comprises 0.4% to 0.51% aluminium (Al).

14. Use of a copper alloy according to any of Claims 1 to 13, wherein the copper alloy comprises boron (B).

## Revendications

1. Utilisation d'un alliage de cuivre dont les éléments présentent les proportions en masse suivantes :
- 46 % à 53,5 % de cuivre (Cu) ;
- 0 % à 1,0 % d'aluminium (Al) ;
- 0 % à 1,40 % de plomb (Pb) ;
- 0 % à 0,2 % de fer (Fe) ;
- 0 % à 0,4 % d'étain (Sn) ;
- 0 % à 0,0002 % de bore (B) ;
- 0 % à 0,2 % d'arsenic (As) ; et
- le reste zinc (Zn),
pour un procédé de fabrication générative.

2. Utilisation d'un alliage de cuivre selon la revendication 1, l'alliage de cuivre comprenant soit 0,12 % à 0,85 % de plomb (Pb), soit 0 % à 0,12 % de plomb (Pb), en particulier 0 % de plomb (Pb).

3. Utilisation d'un alliage de cuivre selon la revendication 1 ou 2, l'alliage de cuivre comprenant 0 % d'arsenic (As).

4. Utilisation d'un alliage de cuivre selon la revendication 1 ou 2, l'alliage de cuivre comprenant 0,02 % à 0,15 % d'arsenic (As).

5. Utilisation d'un alliage de cuivre selon l'une des revendications 1 à 3, l'alliage de cuivre étant pulvérulent et présentant une granulométrie de 5 µm à 1 500 µm.

6. Utilisation d'un alliage de cuivre selon la revendication 5, l'alliage de cuivre étant pulvérulent et présentant une granulométrie de 5 µm à 30 µm.

7. Utilisation d'un alliage de cuivre selon la revendication 5, l'alliage de cuivre étant pulvérulent et présentant une granulométrie de 30 µm à 70 µm.

8. Utilisation d'un alliage de cuivre selon la revendication 5, l'alliage de cuivre étant pulvérulent et présentant une granulométrie de 70 µm à 1 500 µm.

9. Utilisation d'un alliage de cuivre selon l'une des revendications 1 à 3, l'alliage de cuivre comprenant 0,05 % à 0,2 % de fer (Fe).

10. Utilisation d'un alliage de cuivre selon la revendication 9, l'alliage de cuivre comprenant 0,05 % à 0,08 % de fer (Fe).

11. Utilisation d'un alliage de cuivre selon l'une des revendications 1 à 10, l'alliage de cuivre comprenant 0,1 % à 0,4 % d'étain (Sn).

12. Utilisation d'un alliage de cuivre selon la revendication 11, l'alliage de cuivre comprenant 0,1 % à 0,18 % d'étain (Sn)13.

13. Utilisation d'un alliage de cuivre selon l'une des revendications 1 à 12, l'alliage de cuivre comprenant 0,4 % à 0,51 % d'aluminium (Al).

14. Utilisation d'un alliage de cuivre selon l'une des revendications 1 à 13, l'alliage de cuivre comprenant du bore (B).
